# EUROPEAN PATENT SPECIFICATION

(11) **EP 1 232 051 B1**
(45) Date of publication and mention of the grant of the patent: **12.12.2007**
(21) Application number: 00962129.3
(22) Date of filing: 12.09.2000
(51) Int. Cl.: B29C 45/30, B29C 45/28, B29C 45/16

(54) **IMPROVED MIXER APPARATUS AND METHOD FOR INJECTION MOLDING MACHINES**
VERBESSERTE MISCHVORRICHTUNG UND -VERFAHREN FÜR SPRITZGIESSMASCHINEN
MELANGEUR AMELIORE ET PROCEDE DESTINE A DES MACHINES DE MOULAGE PAR INJECTION

(30) Priority: 08.11.1999 US 435965; 16.06.2000 US 594572; 28.06.2000 US 605763
(43) Date of publication of application: 21.08.2002
(73) Proprietor: HUSKY INJECTION MOLDING SYSTEMS LTD., Bolton, Ontario L7E 5S5 (CA)
(72) Inventor: BOUTI, Abdeslam, Swanton, VT 05488 (US)
(74) Representative: Dearling, Bruce Clive
(86) International application number: PCT/CA2000/001092
(87) International publication number: WO 2001/034365

(56) References cited:
- EP-A- 0 825 008
- EP-A- 0 911 138
- US-A- 5 916 605

## Description

### TECHNICAL FIELD

Hot runner injection nozzles having torpedoes or valve stems in the melt stream typically create weld line blemishes in the finished part caused by the melt stream being divided by these obstructions and having to reform downstream thereof. The present invention provides an improved injection nozzle and method which includes an improved flow channel geometry to eliminate or significantly minimize these weld lines, while at the same time permitting faster color change performance.

### BACKGROUND OF THE INVENTION

When plastic melt flows through a hot runner system en route to a mold cavity, it sometimes must separate from a single solid cylindrical flow mass to pass by obstructions, such as torpedoes, support fins and blades, valve stems, stem guides or support blades. When thus divided, the disturbed melt stream recombines downstream of the obstruction and there forms at least one weld line as the melt streams from the divergent paths come back together. Such a weld line, unless re-mixed homogeneously, thereafter continues to be present in the melt stream and appears as a blemish or line in the molded part formed from the mold cavity. Also when changing color of the melt, considerable amounts of resin are wasted in flushing out the old color that is caught or stuck to these flow obstructions.

U.S. Pat. No. 4,266,723 to Osuna-Diaz and U.S. Pat. No. 4,279,588 to Gellert are examples of heat conducting torpedoes. German Patent DE 32 49 486 to Manner and European Patent 0 638 407 to Krummenacher show valve stems being guided by nozzle tips having fins extending into the melt stream. All of these are examples of melt flow obstructions.

U.S. Pat. No. 5,405,258 to Babin shows a hot runner nozzle having a torpedo which is used to conduct heat absorbed from the upstream melt along its length to the gate area. The torpedo is positioned within the melt stream and supported by spiral blades that induce a swirling motion to the melt as it flows past them to help provide a stronger product in the gate area. The melt stream divides from a cylindrical stream upstream of the torpedo to an annular stream to pass the torpedo. It is also subdivided in the said annular stream to pass either side of the multiple spiral blades. Downstream of the blades the melt recombines briefly in the annular channel forming weld lines that may appear as lines in the molded part.

U.S. Pat. No.5,849,343 to Gellert et al. shows a valve gated nozzle having a stem guiding nozzle tip that causes the melt to divide from a cylindrical flow to annular flow first to negotiate the valve stem, then to divide again to negotiate the spiral fins supporting the stem at the tip. As in the '258 torpedo version, the melt must subdivide to pass by the spiral blades and recombine again.

The recombination of the flow in all of the foregoing examples typically causes weld lines to appear in the molded part; also color changing becomes lengthy and expensive.

Several attempts at mixing the melt in hot runner nozzles are shown in U.S. Pat. No. 4,965,028 to Maus et al., U.S. Pat. No. 5,513,976 to McGrevy, European Patent 0 546 554 to Gellert, and German Patent DE 32 01 710 to Gellert. A spiral fluted mixer included in an injection molding machine nozzle is shown in Austrian Patent 231696 to Hehl. All of these examples subdivide the melt stream into discrete paths that must recombine downstream of the obstruction and this tends to create flow blemishes in the molded part.

U.S. Pat. No. 5,545,028 to Hume et al. shows a hot runner tip having a semi-torpedo style in which the outer surface of the torpedo includes a flow channel that converts a single cylindrical inlet flow to an annular flow passing by the tip. However, the '028 patent does not show: grooves on the internal side of the tip body, any initial gap or clearance to eliminate hang-ups, a relaxation zone to reduce residual stresses from flow conversion in a grooved section, or a flow restriction or conformation zone to reduce the thickness variation generated in a grooved zone.

In spiral mandrel dies used in extrusion molding, single or multiple incoming cylindrical melt streams can be converted to a single annular out flowing stream in a continuous process like blown film extrusion molding. U.S. Pat. Nos. 5,783,234 and 5,900,200 to Teng show one application of this in a hot runner valve gated nozzle in which the spiral elements are formed in a comparatively large diameter valve stem and positioned relatively distant from the mold cavity gate. Reference should also be had to the following references: "Analysis for Extrusion Die Design" by B. Proctor, SPE ANTEC, Washington, D.C., pages 211-218 (1971); "The Nuts and Bolts of Blown-Film Design" by C. Rauwendaal, Plastics World, pages 85-87 (1991); and "Extrusion Dies for Plastics and Rubber" by W. Michaeli, Carl Hanser Verlag, Munich, ISBN 3-446-16190-2 (1992).

It is, therefore, a principal object of the present invention to provide a method and apparatus for an improved melt flow mixer located throughout an injection molding machine.

It is a further object of the present invention to provide an improved nozzle and method as aforesaid which eliminates or significantly minimizes weld lines in the finished product.

It is a still further object of the present invention to provide an improved nozzle and method as aforesaid which permits fast color change performance.

Yet another object of the present invention is to provide an improved co-injection nozzle and method which eliminates or significantly reduces weld lines and dips in the molded article, and also to provide an improved method of simultaneous co-injection of two or more materials.

Further objects and advantages of the present invention will appear hereinbelow.

US patent 5,916,605 describes a valve gated injection system that facilitates melt flow to the gate region of a nozzle. The valve pin passes through an annular insert, with the outer surface of the insert including a spiral groove.

### SUMMARY OF THE INVENTION

In accordance with the present invention, the foregoing objects and advantages are readily obtained.

In a first aspect of the present invention there is provided a melt flow mixer for an injection molding machine producing molded parts having a core side surface and a cavity side surface, the mixer comprising: a flow channel having an elongated member disposed in said flow channel, said flow channel having an outlet area; a first spiral groove located on a surface in said flow channel, said first spiral groove decreasing in depth towards said outlet area and wherein lands are defined by regions between said the first spiral groove, said lands increasing in clearance towards said outlet area such that a flow of resin, when applied in use to said melt mixing apparatus, becomes helical through said first spiral groove and axial over said lands to cause distribution of resin as it flows between the surface and said elongated member and out from said outlet area; characterized in that said first spiral groove faces said elongated member, orientation of the first spiral groove improving the cavity side surface appearance of a molded part, formed during a molding cycle of the injection molding machine, by effecting the distribution of resin and the distribution of weld lines or blemishes in the molded part towards the core side surface.

In another aspect of the present invention there is provided A method of injecting and mixing a melt of material into a mold to form a molded part having a core side surface and a cavity side surface, said method comprising: creating a melt flow of material in a melt flow channel; directing said melt flow about an elongated member disposed in said flow channel; helically redirecting said melt flow of material about at least one spiral groove; and intermittently subjecting said helical flow to areas of land defined by regions between said spiral groove to induce axially redirection of said melt flow of material in said areas of said lands, said lands increasing in clearance towards an outlet area; and transferring melt through the outlet to a cavity in a mold; characterized in that the helical redirecting occurs along an inner surface of said flow channel that oppositely faces said elongated member, orientation of the first spiral groove effecting the distribution of resin into the mold to cause the distribution of weld lines or blemishes towards the core side surface of the molded part to improve the appearance of the cavity side surface of the molded part.

In another aspect of the present invention a molded product by the process of claim 17, the molded product having defined by a wall having an inner surface and an outer surface and wherein blemishes or weld lines are distributed away from an outer surface of the molded article.

Further features of the present invention will appear hereinbelow.

### BRIEF DESCRIPTION OF THE DRAWINGS

The present invention will be more readily understandable from a consideration of the accompanying illustrative drawings, wherein:
**FIG. 1** is a partial sectional view of an exemplicative embodiment of the present invention;
**FIG. 1A** is a partial sectional view of a further embodiment of the present invention;
**FIG. 2** is a sectional view of a further embodiment of the present invention;
**FIGS. 3, 4 and 5** are sectional views along lines III--III, IV--IV and V--V, respectively, of FIG. 2
**FIGS. 6, 7, 8 and 9** are partial sectional views of further embodiments of the present invention;
**FIG. 10** is a partial sectional view of a co-injection exemplicative embodiment of the present invention;
**FIGS. 11 and 11A** are partial sectional views of further co-injection embodiments of the present invention;
**FIGS 12 and 12A** are further partial sectional views of further co-injection embodiments of the present invention;
**FIGS. 13 and 14** are partial sectional views of further co-injection embodiments of the present invention;
**FIG. 15** is a partial sectional view of a further exemplicative embodiment of the present invention installed in a molding machine sprue bar;
**FIG. 16** is a partial sectional view of a further embodiment, which however is not part of the present invention;
**FIG. 17** is a partial sectional view of a further embodiment of the present invention;
**FIG. 18** is an isometric view of the present invention installed in various locations within the flow channel of a hot runner system.

### DETAILED DESCRIPTION OF THE PREFERRED EMBODIMENT(S)

In a spiral mandrel die used for extrusion molding the melt stream is first divided into several separate streams using a star shaped, or ring shaped distributor. The streams are then fed into separate spiraling channels cut into the mandrel like a multi-start thread. The depth of the channels constantly decreases and the gap between the mandrel and the inner die wall constantly increases in the direction of flow. This causes a flow stream initially confined within a closed spiral to divide into two streams as it emerges into the widening gap. One stream continues to flow in the spiral channel next to the mandrel wall continuing in a helical direction while a second stream flows over the land of the spiral channel divider and flows in an axial direction. As the spiral channel depth decreases more and more of the resin is added to the axial flow direction. Thus the flow stream gradually transforms from a helical flow direction to an axial flow direction without the creation of weld lines and with the increased mechanical homogeneity and uniformity of melt temperature. This function of operation is not taught by U.S. Pat. No. 4,965,028 which does not teach reducing the channel depth while increasing the wall clearance through the annular flow section of the tip.

When the spiral mandrel die design theory is applied to a hot runner nozzle tip it has been found that with the spiral channels cut into the outer surface of a torpedo insert weld lines are completely eliminated from the surface of the molded part next to the mold core surface, opposite the gate, while blemishes may still occur on the opposed surface formed next to the mold cavity surface adjacent the gate. This approach is shown in U.S. Pat. Nos. 5,783,234 and 5,900,200. In contrast, when the spiral channels are cut into the outer surface of the nozzle channel opposite the torpedo as in accordance with the present invention, the weld lines are completely eliminated from the surface of the molded part next to the mold cavity surface adjacent the gate while blemishes may still remain on the opposed surface formed next to the mold core surface opposite the gate. Since in most cases this mold cavity formed surface is the outside or shown surface of the molded part, this nozzle configuration represents a much preferred operation.

Analogously, in order to obtain a part having both surfaces free of weld lines, a nozzle tip configuration having spiral channels on both sides of the annular channel section is required as also contemplated in accordance with a preferred embodiment of the present invention.

Other variations on configurations will become apparent from the following detailed descriptions.

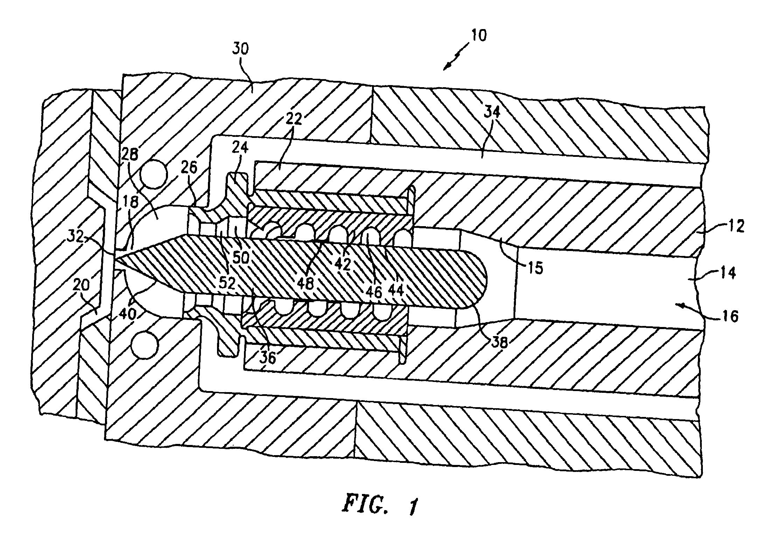

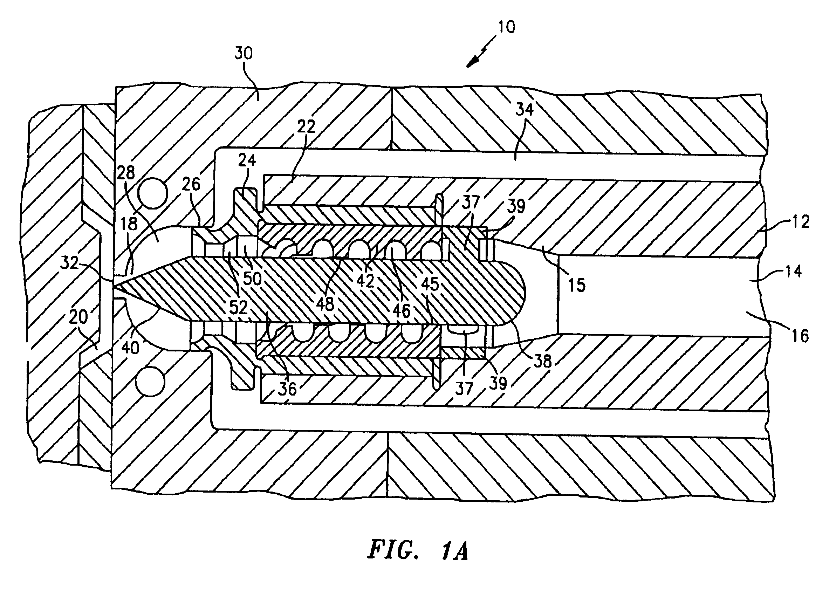

Referring to FIG. 1, a torpedo style injection nozzle 10 is shown including a hot runner nozzle housing 12 and a cylindrical melt flow channel 14 in the housing. The flow channel 14 includes an outer surface 15 thereof, inlet area 16 for receiving molten resin and an outlet area 18 for transferring molten resin to mold cavity 20. Threaded into nozzle housing forward end or nozzle tip 22 is nozzle tip retainer 24, typically made of a thermal insulating material such as titanium, that also forms a seal 26 against the bubble area 28 of gate insert 30 such that molten resin flowing through the nozzle fills bubble area 28 before entering mold cavity 20 through gate 32. Seal 26 also prevents molten resin from leaking into insulating space 34 surrounding nozzle housing 12.

Elongated torpedo 36 is provided extending in flow channel 14 adjacent outlet area 18. Torpedo has a curved rear area 38 and a pointed forward area 40 extending to gate 32. Tip retainer 24 traps torpedo 36 in place by engaging sleeve 42 which is welded or brazed at bond area 44 to the torpedo. The torpedo is desirably made of a thermally conductive material such as beryllium copper or tungsten carbide, while the sleeve can be made of any hard wearing material such as steel or tungsten carbide, possibly manufactured by electrical discharge machining (EDM), powder metal molding, turning, broaching, casting and tapping or any other suitable process.

The outer surface of torpedo 36 is cylindrical. The exposed surface of sleeve 42 includes at least one spiral groove 46. Since the exposed surface of sleeve 42 at least in part forms the outer surface 15 of flow channel 14, the at least one spiral groove 46 is formed in the outer surface of the flow channel and as can be seen in FIG. 1 is cut into the outer surface of the flow channel. In addition, said spiral groove faces torpedo 36.

Lands 48 are provided adjacent said groove. The groove is formed so that it decreases in depth towards outlet area 18 and towards gate 32. Lands 48 are bonded to torpedo 36 at bond area 44 at the upstream end of sleeve 42. The lands 48 present an initial clearance and increase in clearance with respect to torpedo 36 towards outlet area 18 and towards gate 32. The initial clearance is an optional feature and is desirably at least 0.05 mm. This initial clearance is important for color change performance as it enables the flushing of any resin that may hang-up in the dead spots generated between the spiral grooves. Otherwise, the resin will tend to fill part of the small initial clearance and hang-up there for a longer period of time making color change very lengthy. Also, the resin may hang-up there until it degrades and bleeds back into the melt stream. However, with an initial clearance of at least 0.05 mm this abrupt, definite clearance at the end of the contact between the lands and the shaft enables part of the melt stream to flow in the circumference between the grooves to clean the dead spots.

In operation, therefore, the melt flows from the inlet end 16 of flow channel 14 towards outlet end 18 of flow channel 14 through the annular portion of the flow channel. The melt enters one or more of spiral grooves or channels 46 before reaching the outlet end 18. The spiral grooves induce a helical flow path to the melt. As the melt progresses towards the gate 32 progressively more and more of the melt spills over lands 48 as the lands increase in clearance and as the groove depth decreases so that the helical flow direction is gradually changed to an axial flow direction over the length of sleeve 42. At the end of the spiral groove section, the melt passes to first annular section 50 of flow channel 14 downstream of groove 46 which is comparatively large in diameter, and then passes to a further annular section 52 of channel 14 downstream of first annular section 50 which is reduced in diameter and which is located prior to the end of nozzle tip retainer 24 such that the melt stream is relaxed as it flows through annular section 50. The relaxation section helps to minimize stresses and any flow irregularities and homogenize the melt. Finally, the melt passes through gate 32 to fill the mold cavity 20.

The flowline eliminator tip design can be defined by the following five zones:
A zone of adherence (torpedo version or stem guide) or sliding contacts (valve stem version) between the lands and the shaft may feature a tapered seat that locks the shaft to resist pressure action in the case of a torpedo. This zone provides the support and/or alignment for the torpedo or valve stem guide or guidance of the valve stem.
A zone of a finite initial gap or initial clearance that consists of an abrupt elimination of the contact between the sleeve lands and the shaft. This feature prevents resin hang-ups that may occur when the clearance increase starts from zero. The initial gap allows part of the melt to flow around and clean the dead spots generated between the grooves at the beginning of the clearance increase. The initial clearance value depends on the material processed and the process parameters (flow rate, etc.).
A zone of flow conversion where the melt stream is converted gradually into an annular flow without creating weld lines that will appear in the molded part. In this zone the depth of the grooves decreases gradually and the gap between the shaft and the lands increase gradually.
A relaxation zone that enables the polymer's molecules to relax from the stresses accumulated during the flow conversion in the previous zone. The relaxation zone can be used as well as a run-out for manufacturing tools.
A conformation zone that squeezes the melt through a tight annular section to reduce the thickness variations that may have been generated by the successive spill-overs that occurred during flow conversion. This zone can be an annular section that converges towards the gate if it is required by the application.

The embodiment of FIG. 1A is similar to FIG. 1 wherein torpedo or shaft 36 includes one or more fins 37, as for example 2, 3, or 4 fins, which support the torpedo against nozzle housing 12. Fins 37 include an annular portion 39 which engage the nozzle housing. In the embodiment of FIG. 1A, the torpedo is not welded or brazed as at bond area 44 in FIG. 1, but simply engaged or press-fit at engagement area 45. Thus, a firm engagement is readily provided. As a further alternative, the torpedo can be used as a valve stem guide if it features a guiding hole or channel.

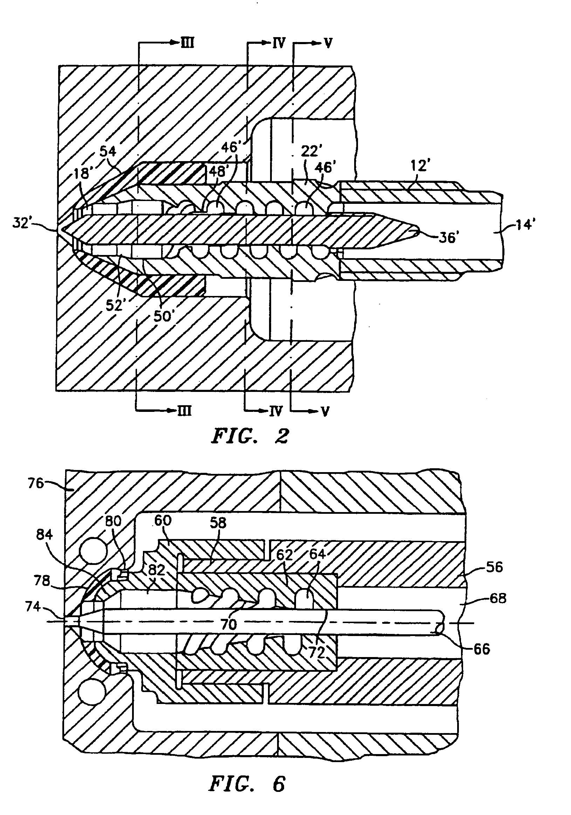

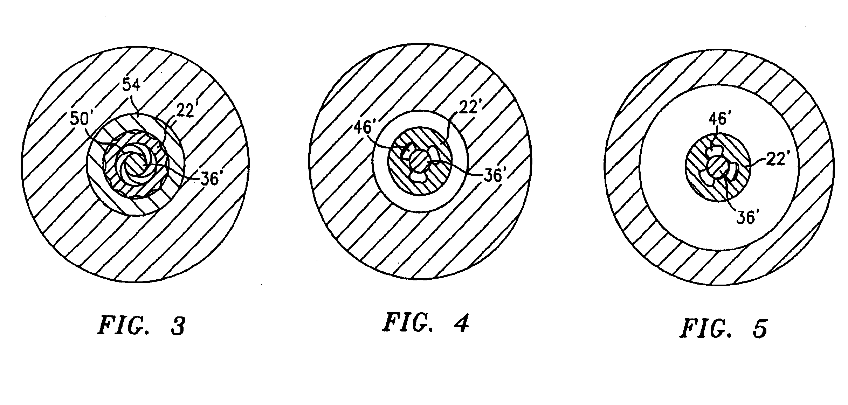

FIG. 2 shows a further embodiment of the present invention of a torpedo style injection nozzle wherein the nozzle tip retainer 24 from FIG. 1 has been eliminated and the spiral channels are formed directly in the nozzle housing or nozzle tip. Thus, FIG. 2 shows torpedo 36', nozzle housing 12' having a forward end or nozzle tip 22', flow channel 14' and gate 32'. In accordance with the embodiment of FIG. 2, spiral groove or channel 46', is formed directly in nozzle tip 22' which is made from a material such as beryllium copper, steel, tungsten carbide or other suitable material. The nozzle tip can if desired be threaded onto a separate nozzle housing. Nozzle tip 22' can be made for example by broaching, casting, tapping, turning, EDM, powder metal molding or any other suitable method. In addition, bubble area 28 has been eliminated by providing insulator 54 adjacent gate 32', which may be made of a suitable polymeric material. This effectively minimizes areas where melt can hang up and degrade. The conductive torpedo 36' is welded, brazed, press-fit or taper seated to nozzle tip 22' as in FIG. 1. FIGS. 3, 4 and 5 are sectional views along lines III--III, IV--IV and V--V, respectively, showing how the spiral groove geometry varies. Lands 48' are provided adjacent the groove 46'. In a manner after FIG. 1, the spiral groove decreases in depth towards the outlet area 18' and the lands increase in clearance from the torpedo towards the outlet area 18'. First annular section 50' and further annular section 52' are also provided as in FIG. 1.

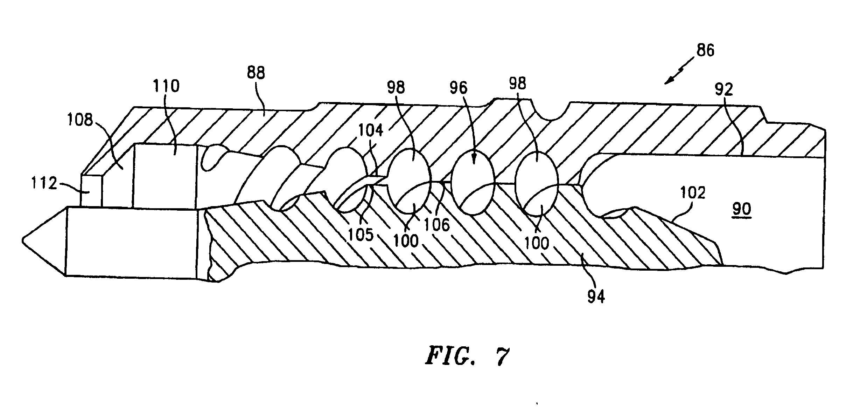

The embodiment of FIG. 6 shows the nozzle housing 56 with nozzle housing forward end or nozzle tip 58 including a threaded cap 60 that retains sleeve 62 in place. Spiral channels or grooves 64 are formed in sleeve 62. Sleeve 62 also acts as a guide for the movable valve stem 66 which is located in flow channel 68 where the valve stem is contacted by lands 70 at contact areas 72. Downstream of contact areas 72, the contact ceases as the spiral channel or groove depth decreases and the land clearance from the valve stem increases towards valve gate 74. Cap 60 is spaced from gate insert 76 by insulator 78 which may be made from a suitable polymeric material, and if desired this may be backed up with for example a titanium seal insulator 80.

In operation, when valve stem 66 is retracted by suitable motive means (not shown) the melt flows from the annular portion of flow channel 68 into one or more of spiral grooves or channels 64 which induce a helical flow path. As the melt progresses towards valve gate 74 more and more of the melt spills over lands 70 as the lands increase in clearance from the valve stem and as the groove depth decreases so that the helical flow direction is gradually changed to an axial flow direction over the length of sleeve 62. At the end of the spiral groove portion, there is a first annular section 82 of flow channel 68 which is comparatively large in diameter, followed by a further annular section 84 which has a reduced diameter such that the melt stream is relaxed as it flows through the first annular section. The relaxation section help minimize stresses accumulated by the melt during flow conversion and minimize any flow irregularities and homogenize the melt. The relaxation zone also may be used as a tool run-out for certain manufacturing processes such as tapping, turning, etc. Finally, the melt passes through gate 74 to fill the mold cavity.

FIG. 7 shows a further embodiment of the present invention including dual spiral grooves or channels. In accordance with FIG. 7, injection nozzle 86 includes nozzle tip 88 and flow channel 90 including outer surface 92 thereof. Torpedo 94 is provided in the flow channel. A dual spiral groove or channel 96 is provided by forming an outer groove section 98 in nozzle tip 88 in the outer surface 92 of flow channel 90, and an inner groove section 100 in the adjoining outer surface 102 of torpedo 94 to form a substantially circular groove 96. Lands 104, 105 are provided adjacent the grooves. In accordance with FIG. 7, torpedo 94 is brazed or welded to nozzle tip 88 at upstream land contact areas 106. Naturally, other alignment features can be provided. For example, an alignment means may be provided to align the grooves of the sleeve with grooves of the torpedo, as for example a dowell pin. Thereafter, the depth of spiral channels 96 progressively decreases towards flow channel outlet area 108 and the clearance between lands 104, 105 gradually increases towards outlet area 108. Relaxation zone 110 and diameter reduction zone 112 are provided downstream of the spiral groove as in previous embodiments. The spiral grooves may also have different configurations, angles or opposite orientations, if desired.

In operation, as the melt progresses towards the gate end of the tip progressively more and more of the melt spills over the lands as they increase in clearance and as the groove depth decreases so that the helical flow direction is gradually changed to an axial flow direction. Because melt is spilling over the lands on both sides, there only remains helical flow in the edges of the channel until this too becomes converted to axial flow as the spiral channels blend away. Thus any melt imperfections associated with flow adjacent a smooth wall are eliminated on both sides of the molded part. The torpedo and tip can be the same or dissimilar materials made from for example beryllium copper, steel, tungsten carbide or any other suitable heat conductive abrasion resistant materials. Also possible is a one piece integral piece formed on one material by powder metal molding, lost core molding or any other suitable manufacturing method.

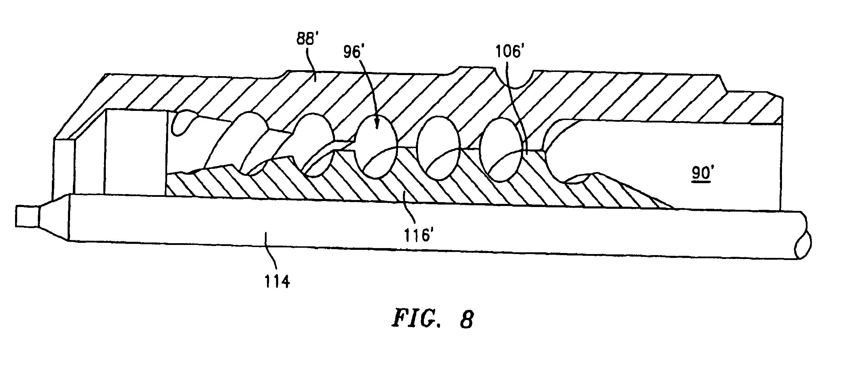

The embodiment of FIG. 8 is similar to FIG. 7 including a dual spiral groove or channel 96'. However, FIG. 8 includes movable valve stem 114 in a flow channel 90' slidably guided by torpedo insert 116. The torpedo insert is brazed or welded or engaged to nozzle tip 88' at land contact areas 106', as with an alignment feature, such as a dowell pin. This embodiment operates in a manner similar to FIG. 7.

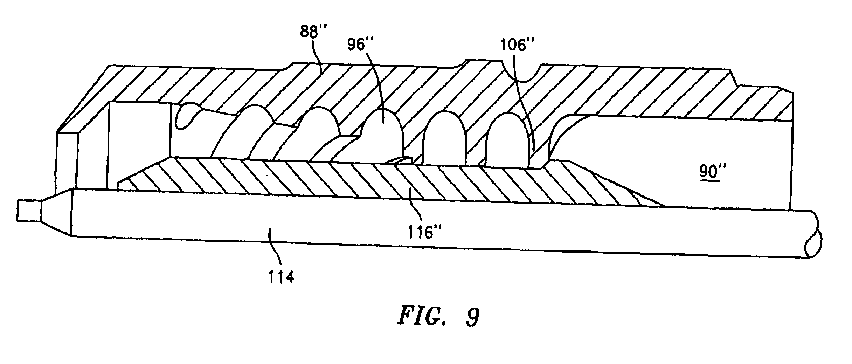

The embodiment of FIG. 9 is similar to FIG. 8 including a spiral groove or channel 96", movable valve stem 114 in flow channel 90" slidably guided by torpedo insert 116'. The torpedo insert is brazed or welded or engaged to nozzle tip 88" at land contact areas 106". However, in the embodiment of FIG. 9, the spiral groove or channel 96" is formed solely in nozzle tip 88" and the torpedo 116", without grooves, acts as a valve stem guide.

The various sealing and insulating details at the bubble and gate end of the nozzle are interchangeable between embodiments. Thus, for example, the nozzle tip retainer 24, polymeric insulator 54 and 78 and titanium seal insulator 80 can be employed in all versions.

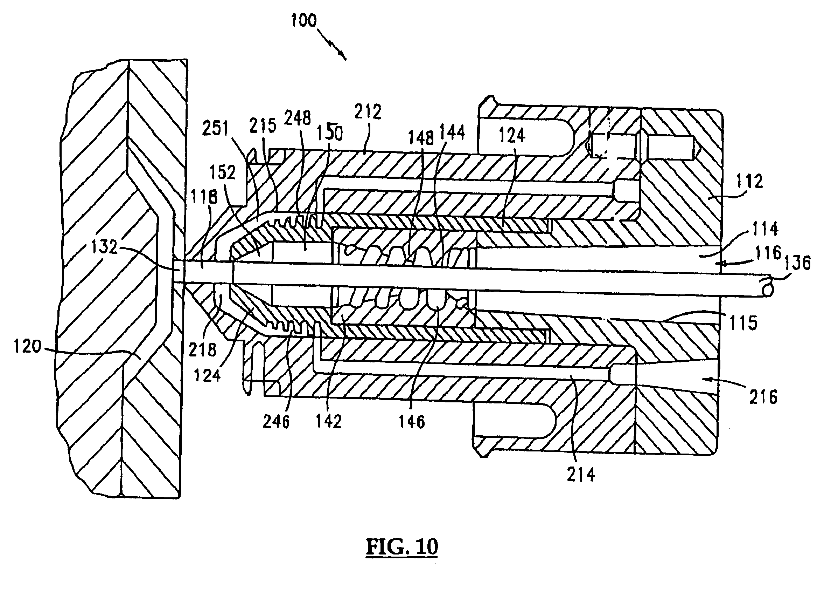

Referring to FIG. 10, a valve gate style co-injection nozzle 100 is shown including a hot runner nozzle housing 112 and a cylindrical first melt flow channel 114 in the housing. The flow channel 114 includes an outer surface 115 thereof, inlet area 116 for receiving a first molten resin and a first outlet area 118 for transferring the first molten resin to mold cavity 120. Co-injection nozzle 100 includes a forward end or nozzle tip 124 downstream of nozzle housing 112 and connected thereto.

Elongated torpedo or valve stem 136 is provided extending in flow channel 114 adjacent first outlet area 118. The torpedo may if desired have a flat forward area as shown or a curved rear area and a pointed forward area extending to gate 132. Torpedo or valve stem 136 may desirably be movable to progressively block or open gate 132 or first outlet area 118 and the connection of the first flow channel 114 to the first outlet area 118. Thus, the elongated shaft or torpedo 136 may if desired be a movable valve stem operative to permit and stop resin flow. Naturally, the torpedo or valve stem may have any suitable or convenient configuration.

Nozzle tip 124 trap sleeve 142 in place against nozzle housing 112 with the torpedo or valve stem 136 within sleeve 142 and engaged thereto at contact areas 144, or bonded thereto at contact areas 144. The torpedo or valve stem is desirably made of steel and can also for example be made of a thermally conductive material such as beryllium copper or tungsten carbide, while the sleeve can be made of any hard wearing material such as steel or tungsten carbide, possibly manufactured by electrical discharge machining (EDM), powder metal molding, turning, broaching, casting and tapping or any other suitable process.

The outer surface of torpedo 136 is desirably cylindrical. The exposed surface of sleeve 142 includes at least one first spiral groove 146. Since the exposed surface of sleeve 142 at least in part forms the outer surface 115 of flow channel 114, the at least one spiral groove 146 is formed in the outer surface of the flow channel and as can be seen in FIG. 10 is cut into the outer surface of the flow channel. In addition, said spiral groove faces torpedo 136.

Lands 148 are provided adjacent said groove. The groove is formed so that it decreases in depth towards first outlet area 118 and towards gate 132. Lands 148 desirably contact torpedo 136 at contact area 144 at the upstream end of sleeve 142. The lands 148 present an initial clearance and increase in clearance with respect to torpedo 136 towards first outlet area 118 and towards gate 132.

In addition, nozzle 100 includes a second flow channel 214 which flows circumferentially around first flow channel 114 and includes an inlet area 216 for receiving a second molten resin and a second flow channel outlet area 218 communicating with first outlet area 118 for transferring the second molten resin through gate 132 to mold cavity 120. Second flow channel 214 includes at least one second spiral groove 246 in the outer surface of nozzle tip 124 forming the inner surface of second flow channel 214 and facing outer nozzle housing 212.

Lands 248 are provided adjacent said second groove. Moreover, similar to the first groove 146, the second groove is formed so that it decreases in depth towards outlet areas 218 and 118 and towards gate 132. Lands 248 may be bonded to or contact outer wall 215 of second flow channel 214 at the upstream end of nozzle tip 124 as in the first flow channel 114.

However, in the embodiment of FIG. 10, lands 248 present an initial clearance with respect to outer wall 215, and an increase in clearance towards outlet areas 218 and 118 and towards gate 132. The initial clearance desirably may have the same dimensions as in the first flow channel and offers the same advantages.

In operation in the second flow channel, therefore, the second melt flows from the inlet end 216 of flow channel 214 towards the outlet end of flow channel 214 through the annular portion of the flow channel. The second melt enters one or more of spiral grooves or channels 246 before reaching the second flow channel outlet area 218 through portals that may desirably be aligned with the start of the helical groove. The alignment may be provided by a dowel pin or locating pin between nozzle housing 112 and outer nozzle housing 212. The spiral grooves induce a helical flow path to the melt. As the melt progresses towards the gate 132 progressively more and more of the melt spills over lands 248 as the lands increase in clearance and as the groove depth decreases so that the helical flow direction is gradually changed to an axial flow direction over the length of grooves 246.

At the end of the spiral groove section, the melt passes to a second flow channel annular section 251 of flow channel 214 downstream of grooves 246, and then passes to second flow channel outlet area 218, outlet area 118, gate 132 and mold cavity 120. Desirably, the first and second melt flows are sequential, although simultaneous flows or partially simultaneous flows are possible if desired.

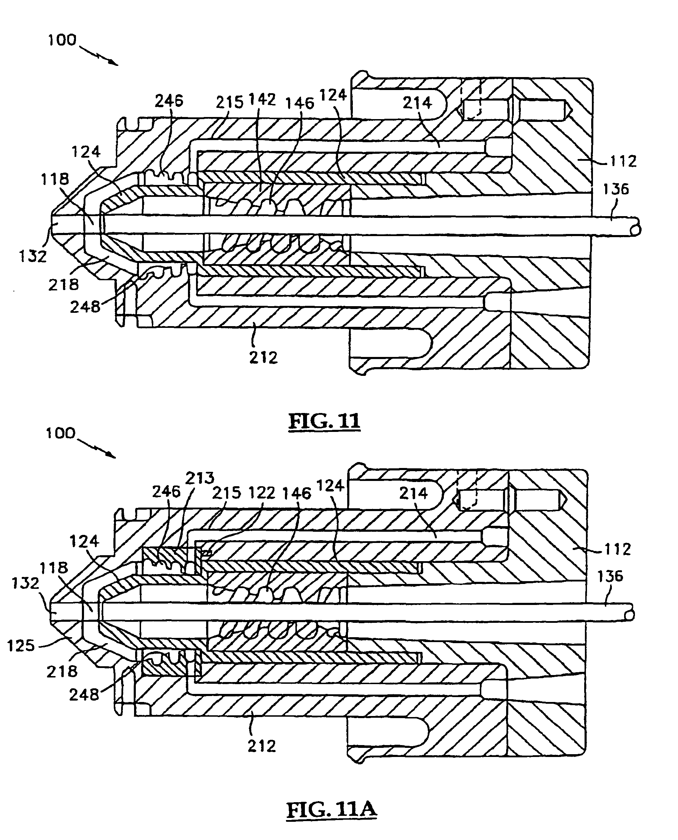

The embodiment of FIG. 11 is similar to FIG. 10 except that the second spiral groove 246 is formed in the outer surface 215 of second flow channel 214 opposed to nozzle tip 124. In addition, the second groove 246 decreases in depth towards outlet areas 218 and 118 and with lands 248 increasing in clearance towards outlet areas 218 and 118.

The embodiment of FIG. 11A is similar to the embodiment of FIG. 11 showing grooves 246 in outer nozzle housing 212 formed in a separate insert 213 located by locating pin 122 and held in place by nozzle cap 125.

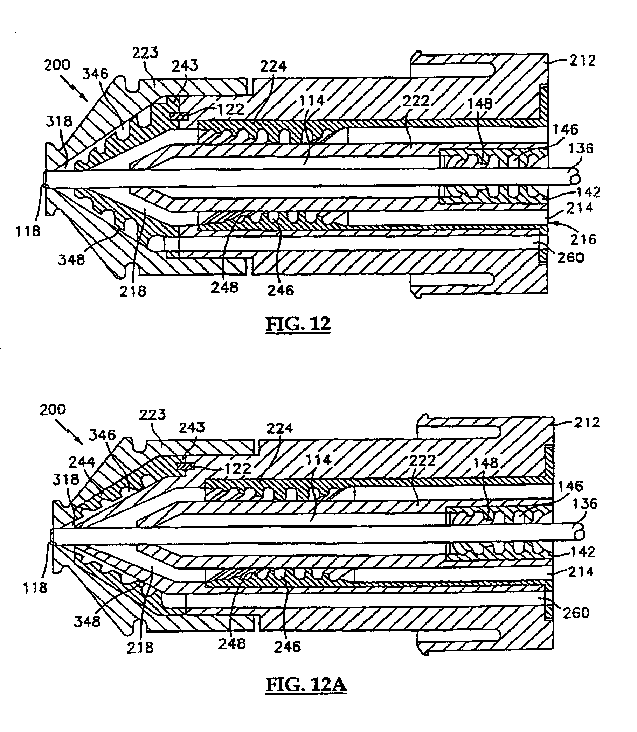

The embodiment of FIG. 12 includes a third flow channel 260 in injection nozzle 200. Injection nozzle 200 includes nozzle housing 212 and inner nozzle 222. First flow channel 114 for first molten resin flow includes first sleeve 142 held in place by inner nozzle 222 and forming first spiral groove 146. Second inner nozzle 224 forms second spiral groove 246 in second flow channel 214 for second molten resin flow. The third molten resin flows in third flow channel 260 in the outer most portion of nozzle 200 through outer sleeve 243 which is held in place by outer nozzle tip 223 and locating pin 122.

First spiral groove 146 decreases in depth towards third outlet area 318 and outlet area 118' and first lands 148 increase in clearance towards third outlet area 318 and outlet area 118'. Similarly, second spiral groove 246 decreases in depth towards outlet areas 318 and 118' and second lands 248 increase in clearance towards outlet areas 318 and 118'. Also, third spiral groove 346 decreases in depth towards outlet areas 318 and 118' and third lands 348 increase in clearance towards outlet areas 318 and 118'.

In the embodiment of FIG. 12, if desired first sleeve 142 and first spiral groove 146 may be located relatively farther upstream from the second spiral groove than in the embodiments of FIGS. 10 and 11. Also, in the embodiment of FIG. 12, molten resin flows from first spiral groove 146 directly into first flow channel 114. Also, desirably, the resin flows are sequential.

Thus, the flow paths of the first, second and third resins are through spiral grooves that decrease in depth towards the outlet areas and with lands adjacent the grooves that increase in clearance towards the outlet areas so that a helical flow path of the resins is provided through the respective spiral grooves and an axial flow path of the resins is provided over the respective lands. Moreover, the co-injection nozzle of FIG. 12 with three (3) resins obtains the aforesaid considerable advantages of the present invention, e.g., elimination of weld lines, homogeneous flow and uniform annular flow velocity which leads to uniform layering, elimination of the dip effect and reduction of nozzle shifting.

The embodiment of FIG. 12A is similar to the embodiment of FIG. 12 showing the third spiral groove 346 on the inside surface of insert 244.

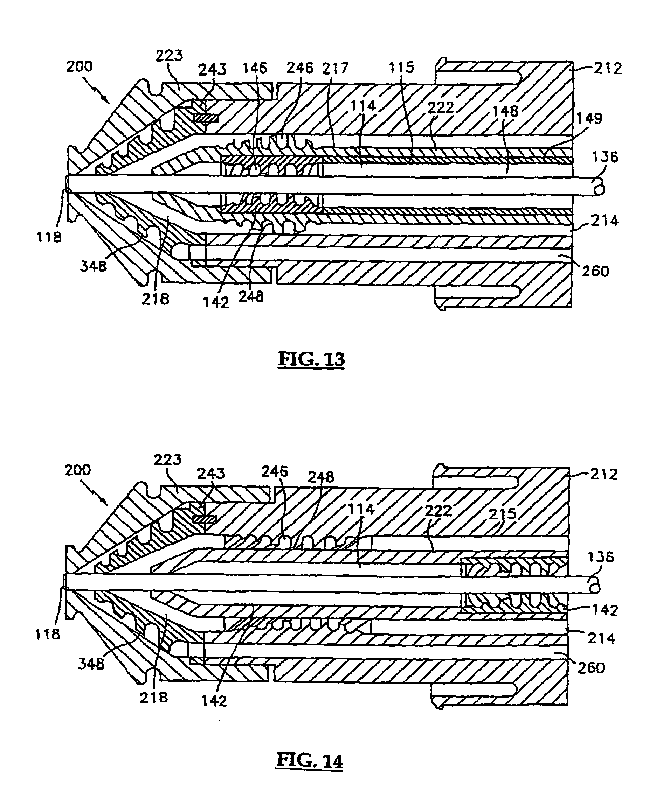

The embodiments of FIGS. 13 and 14 both show a co-injection nozzle 200 with three flow channels 114, 214 and 260 for three molten resin flows, as with the embodiment of FIG. 12. However, in the embodiment of FIG. 13, the second spiral groove 246 is formed in the inner surface 217 of second flow channel 214 in the inner nozzle 222, with lands 248 and grooves 246 facing nozzle housing 212. Also, the first spiral groove 146 in first flow channel 114 is formed in first sleeve 142 held in place in the forward end of first flow channel 114 by first retainer 149 which forms an outer surface 115 of the first flow channel 114.

In the embodiment of FIG. 14, the second spiral groove 246 is formed in the outer surface 215 of second flow channel 214 in nozzle housing 212, with lands 248 and grooves 246 facing inner nozzle tip 222.

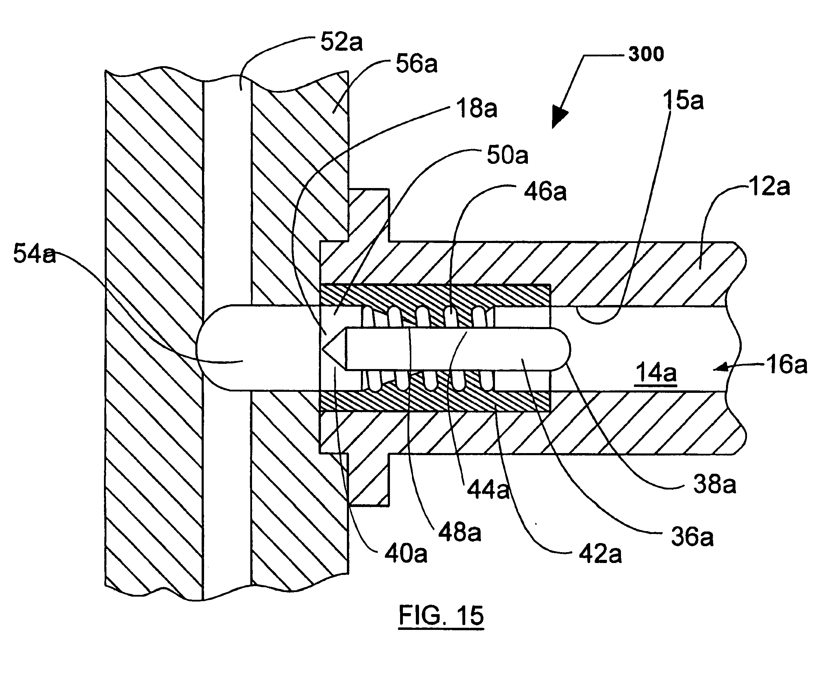

Referring now to FIG. 15, (where like features use like numerals) another preferred embodiment of the present invention 300 is shown in which the mixer apparatus is installed in a sprue bar 12a of an injection molding machine. A torpedo style melt mixer 300 is shown including a cylindrical flow channel sprue bar 12a and a melt flow channel 14a in the sprue bar. The flow channel 14a includes an inner surface 15a thereof, inlet area 16a for receiving molten resin and an outlet area 18a for transferring molten resin further downstream in a hot runner channel 52a.

Elongated torpedo 36a is provided extending in flow channel 14a adjacent outlet area 18a. The torpedo 36a has a curved rear area 38a and a pointed forward area 40a. The torpedo is trapped and located in the flow channel 14a by a sleeve 42a which is inserted into the flow channel housing 12a. The torpedo 36a is engaged by the sleeve 42a at bond area 44a, which rigidly affixes the torpedo to the sleeve by welding, brazing or similar retention means.

The outer surface of the torpedo 36a is cylindrical. The exposed surface of the sleeve 42 includes at least one spiral groove 46a. Since the exposed surface of the sleeve 42a at least in part forms the inner surface 15a of flow channel 14a, at least one spiral groove 46a is formed in the inner surface of the flow channel. In addition, said spiral groove faces torpedo 36a.

Lands 48a are provided adjacent the spiral groove 46a. The groove is formed so that it decreases in depth towards the outlet area 18a. Lands 48a are bonded to torpedo 36a at bond area 44a adjacent the inlet area 16a. The lands 48a present an initial clearance and increase in clearance with respect to torpedo 36a towards outlet area 18a. The initial clearance is an optional feature and is preferably at least 0.05mm.

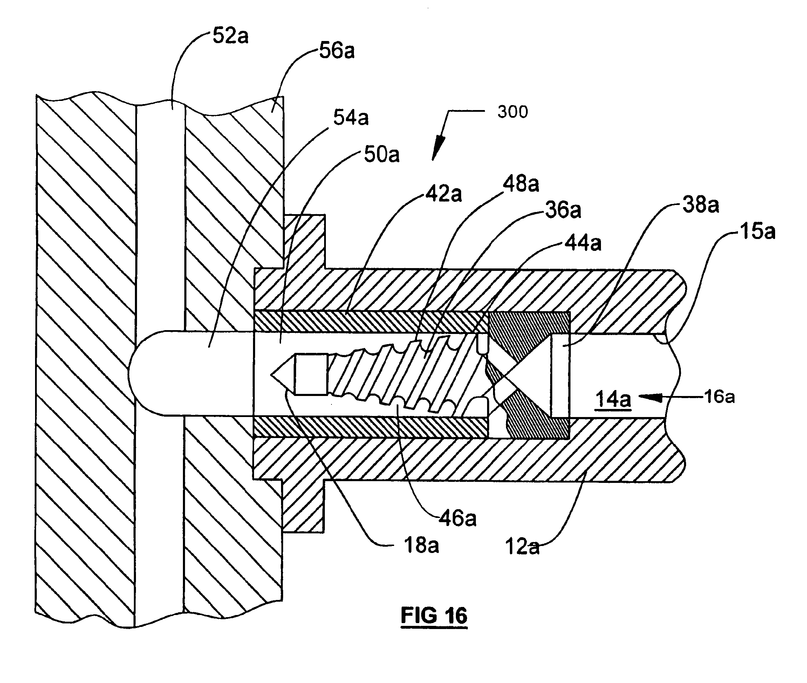

Referring now to FIG. 16, this embodiment, which however is not part of the present invention, is similar to FIG. 15 (so similar numerals are used to point out similar features) wherein the torpedo 36a is a tapered shaft with a helical groove therein. Alternatively, the torpedo 36a could be cylindrical, with the spiral grooves 46a decreasing in depth towards the outlet area 18a. The melt flows into an annular inlet area 16a of the torpedo 36a and then enters at least one spiral groove 46a located on the outer surface of the torpedo 36a. Similar to the embodiment of FIG. 15, the depth of the spiral groove 46a decreases toward the outlet area 18a. Located adjacent groove 46a, are lands 48a which interface with the sleeve 42a, the height of the lands 48a decrease towards the outlet area 18a. The biggest difference between this embodiment, which however is not part of the present invention, and the embodiment shown in FIG. 15 is that the location of the spiral groove 46a is on the outside surface of torpedo 36a, facing the flat cylindrical surface of sleeve 42a. Alternatively, the cylindrical surface of sleeve 42a could be tapered so as to create a gradually changing gap with the lands 48a.

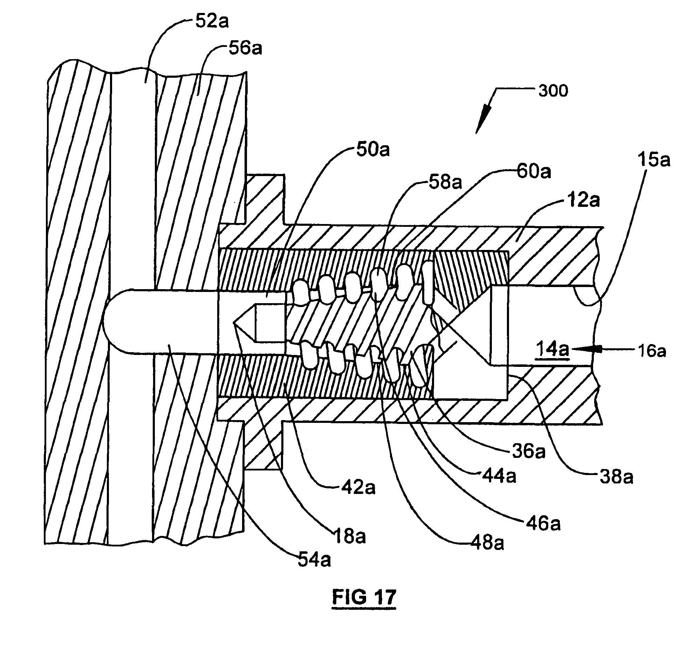

Referring now to FIG. 17, another embodiment of the present invention is shown. This embodiment is similar to the previously discussed embodiments in FIGS. 15 and 16, with the biggest difference being that a second spiral groove 58a is formed in the inside surface of the sleeve 42a, the second spiral groove faces the torpedo 36a, with second lands 60a adjacent the second spiral groove 58a. Lands 48a are located adjacent the second lands 60a, with the gap created between the lands 48a and 60a increasing towards the outlet area 18a. The second spiral groove 58a is located adjacent the spiral groove 48a, thereby creating a contiguous spiral groove for the melt as it travel towards the outlet area 18a.

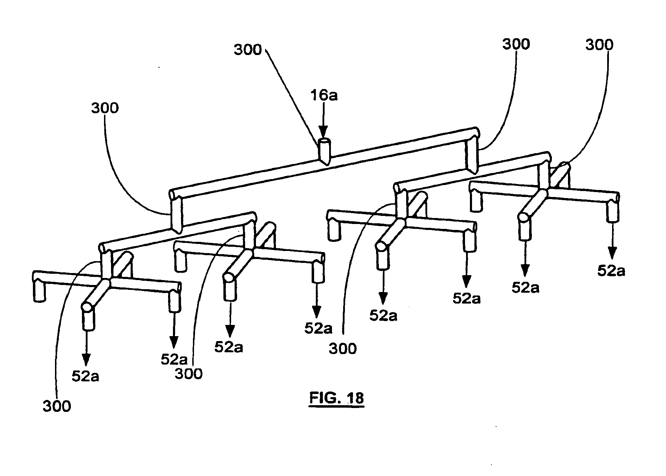

Referring to FIG. 18, the preferred embodiments 300 of the present invention can be installed in many locations within an injection molding machine and a hot runner system. As the biggest flow imbalances are caused by the splitting of the non-homogenous melt within the hot runner channel 52a, the present invention performs best if installed upstream at each branch in the molding machine. The mixer of the present invention increases the melt homogeneity before a split occurs, thereby reducing the presence of any flow imbalances. Reducing flow imbalances as previously discussed reduces the chances of weld lines in the product as well as ensure equal filling of the mold cavities.

The present invention is highly advantageous. Testing has demonstrated that the present invention eliminates weld lines, produces a homogeneous melt, and enables fast color changes and a stronger molded part, particularly in the gate area.

Significant features of the present invention include the spiral flow channels with their decreasing depth and increasing land clearance. The initial clearance with a finite length minimizes or eliminates possible hang-ups at the start of clearance. The initial clearance is a significant feature for color change performance as it enables the flushing of any resin that may hang-up in the dead spots generated between the spiral grooves. In case of the absence of initial clearance, the resin fills part of the small clearance and then hangs-up there for a longer time making color change very lengthy. The resin may also hang-up there until it degrades and bleeds back into the melt stream. The present invention eliminates or substantially minimizes flow lines especially if no initial clearance is provided. However, when an abrupt definite clearance is provided at the end of the contact between the lands and the shaft, it is possible to enable part of the melt stream to flow in the circumference between the grooves to clean the dead spots. In addition, a relaxation space is provided downstream of the spiral channels. The present invention is also suitable for use with both pin point torpedo, stem guiding torpedo, and sliding valve stem configurations and is particularly versatile.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are defined by the claims.

## Claims

1. A melt flow mixer for an injection molding machine producing molded parts having a core side surface and a cavity side surface, the mixer comprising:
a flow channel (14) having an elongated member (36) disposed in said flow channel (14), said flow channel having an outlet area (18);
a first spiral groove (46) located on a surface in said flow channel (14), said first spiral groove (46) decreasing in depth towards said outlet area (18) and wherein lands (48) are defined by regions between said first spiral groove (46), said lands increasing in clearance towards said outlet area (18) such that a flow of resin, when applied in use to said melt mixing apparatus, becomes helical through said first spiral groove (46) and axial over said lands (48) to cause distribution of resin as it flows between the surface and said elongated member (36) and out from said outlet area (18);
**characterized in that** said first spiral groove (46) faces said elongated member (36), orientation of the first spiral groove improving the cavity side surface appearance of a molded part, formed during a molding cycle of the injection molding machine, by effecting the distribution of resin and the distribution of weld lines or blemishes in the molded part towards the core side surface.

2. The melt mixing apparatus as in claim 1, further comprising:
a second spiral groove located on said elongated member (36);
said first spiral groove (46) aligning with said second spiral groove to further improve a core side surface of said molded part.

3. The mixer as in claim 1 or 2, wherein said elongated member (36) is one of:
a torpedo;
a movable valve stem (74) operative, in use, to control a flow of said resin; and
a valve stem guide (116).

4. The mixer as in claim 1, 2 or 3, wherein said melt flow channel (14) is disposed in one of:
a gate insert (30);
in a sprue bar (12a); and
a hot runner manifold.

5. The mixer as in claim 4, wherein said gate insert (30) is disposed in a hot runner manifold.

6. The mixer as in claim 4, wherein said hot runner manifold is disposed in a mold.

7. The mixer as in any of claims 1 to 5, wherein said surface in said flow channel (14) is:
an interior surface of said flow channel (14); or
a surface of an insert (42) located in said flow channel; or
a surface of a nozzle tip (22') aligned with said flow channel (14).

8. The mixer as in any preceding claim, further comprising a first annular section (50) downstream of said first spiral groove (46) for relaxing said resin from stresses.

9. The mixer as in any preceding claim, further comprising a second annular section (52) downstream from said first annular section (50) for reducing thickness variations in said resin.

10. The mixer as in any preceding claim, wherein said first spiral groove (46) is substantially a semi-circular cross section.

11. The mixer as in claim 2, wherein said first and second grooves (46) are substantially a semi-circular cross section.

12. The mixer as in any preceding claim, wherein a portion of said lands (48) are bonded to said elongated member (36) and said lands (48) increase in clearance with respect to said elongated member (36) towards said outlet area (18).

13. The mixer as in any preceding claim, wherein an initial clearance between said elongated member (36) and said lands (48) is at least 0.05mm.

14. The mixer as in claim 1 or 2, further including a nozzle tip (58) and a nozzle tip retainer (60), said nozzle tip retainer (60) engaging said nozzle tip (58) securing said nozzle tip (58) in said melt flow channel (14).

15. The mixer as in claim 14, further including a gate insert (30) adjacent said outlet area (18) which forms a bubble area (28), wherein said nozzle tip retainer (60) forms a seal with said bubble area (28).

16. The mixer as in claim 1 or 2, further including at least two melt flow channels (14, 214) wherein at least mixers are disposed in separate melt flow channels (14, 214).

17. A method of injecting and mixing a melt of material into a mold to form a molded part having a core side surface and a cavity side surface, said method comprising:
creating a melt flow of material in a melt flow channel (14);
directing said melt flow about an elongated member (36) disposed in said flow channel (14);
helically redirecting said melt flow of material about at least one spiral groove (46); and
intermittently subjecting said helical flow to areas of land (48) defined by regions between said spiral groove (46) to induce axial redirection of said melt flow of material in said areas of said lands (48), said lands (48) increasing in clearance towards an outlet area (18); and
transferring melt through the outlet to a cavity in a mold;
**characterized in that**
the helical redirecting occurs along an inner surface (42) of said flow channel (16) that oppositely faces said elongated member (36), orientation of the first spiral groove (46) effecting the distribution of resin into the mold to cause the distribution of weld lines or blemishes towards the core side surface of the molded part to improve the appearance of the cavity side surface of the molded part.

18. The method of injecting and mixing a melt of material into a mold to form a molded part in accordance with claim 17, wherein helically redirecting said melt flow of material helically redirects said melt flow of material about a second spiral groove (96) located on said elongated member and aligning with the first spiral groove (46).

## Patentansprüche

1. Schmelzestrommischer für eine Spritzgießmaschine, die geformte Teile erzeugt, welche eine Kernseitenfläche und eine Hohlraumseitenfläche haben, wobei der Mischer aufweist:
einen Strömungskanal (14) mit einem langgestreckten Element (36), das in dem Strömungskanal (14) angeordnet ist, wobei der Strömungskanal eine Auslaßzone (18) hat;
eine erste Spiralnut (46), die auf einer Oberfläche in dem Strömungskanal (14) vorgesehen ist, wobei die erste Spiralnut (46) gegen die Auslaßzone (18) hin in der Tiefe abnimmt, und wobei durch Bereiche zwischen der ersten Spiralnut (46) Stege (48) definiert werden, wobei das Spiel der Stege gegen die Auslaßzone (18) hin zunimmt, derart, daß ein Harzstrom, der im Betrieb in die Schmelzvorrichtung eingebracht wird, durch die erste Spiralnut (46) wendelförmig und über die Stege (48) axial wird, um eine Harzverteilung zu bewirken, wenn der Strom zwischen der Oberfläche und dem langgestreckten Element (36) und von der Auslaßzone (18) heraus strömt;
**dadurch gekennzeichnet, daß** die erste Spiralnut (46) dem langgestreckten Element (36) zugekehrt ist, wobei die Orientierung der ersten Spiralnut das Aussehen der Hohlraumseitenfläche eines geformten Teiles verbessert, der während eines Formungszyklus der Spritzgießmaschine geformt wird, indem die Harzverteilung und die Verteilung der Schweißlinien oder -fehler in dem geformten Teil gegen die Kernseitenfläche bewirkt wird.

2. Schmelzemischvorrichtung nach Anspruch 1, die ferner aufweist:
eine zweite Spiralnut, die an dem langgestreckten Element (36) vorgesehen ist;
wobei die erste Spiralnut (46) mit der zweiten Spiralnut ausgerichtet ist, um die Kernseitenfläche des geformten Teiles weiter zu verbessern.

3. Mischer nach Anspruch 1 oder 2, bei welchem das langgestreckte Element (36) eines von folgenden ist:
ein Torpedo;
ein beweglicher Ventilschaft (74) der im Betrieb den Strom des Harzes steuert; und
eine Ventilschaftführung (116).

4. Mischer nach Anspruch 1, 2 oder 3, bei welchem der Schmelzeströmungskanal (14) in einem von folgenden angeordnet ist:
einem Einlaufeinsatz (30);
einer Einlaufstange (12a); und
einem Heißkanalverteiler.

5. Mischer nach Anspruch 4, bei welchem der Einlaufeinsatz (30) in einem Heißkanalverteiler vorgesehen ist.

6. Mischer nach Anspruch 4, bei welchem der Heißkanalverteiler in einer Form vorgesehen ist.

7. Mischer nach einem der Ansprüche 1 bis 5, bei welchem die Oberfläche in dem Strömungskanal (14) ist:
eine Innenfläche des Strömungskanals (14); oder
eine Oberfläche eines Einsatzes (42), der in dem Strömungskanal angeordnet ist; oder
eine Oberfläche einer Düsenspitze (22'), die mit dem Strömungskanal (14) ausgerichtet ist.

8. Mischer nach einem der vorhergehenden Ansprüche, der ferner einen ersten ringförmigen Abschnitt (50) stromabwärts der ersten Spiralnut (46) aufweist, um Spannungen in dem Harz abzubauen.

9. Mischer nach einem der vorhergehenden Ansprüche, der ferner einen zweiten ringförmigen Abschnitt (52) stromabwärts des ersten ringförmigen Abschnittes (50) aufweist, um Dikkenvariationen in dem Harz zu reduzieren.

10. Mischer nach einem der vorhergehenden Ansprüche, bei welchem die erste Spiralnut (46) im wesentlichen halbkreisförmigen Querschnitt hat.

11. Mischer nach Anspruch 2, bei welchem die erste und zweite Nut (46) im wesentlichen halbkreisförmigen Querschnitt haben.

12. Mischer nach einem der vorhergehenden Ansprüche, bei welchem ein Teil der Stege (48) an das langgestreckte Element (36) gebunden ist, und das Spiel der Stege (48) bezüglich dem langgestreckten Element (36) gegen die Auslaßzone (18) zunimmt.

13. Mischer nach einem der vorhergehenden Ansprüche, bei welchem ein Anfangsspiel zwischen dem langgestreckten Element (36) und den Stegen (48) zumindest 0,05 mm beträgt.

14. Mischer nach Anspruch 1 oder 2, der ferner eine Düsenspitze (58) und einen Düsenspitzerhalter (60) aufweist, wobei der Düsenspitzenhalter (60) in die Düsenspitze (58) eingreift und die Düsenspitze (58) in dem Schmelzeströmungskanal (14) festlegt.

15. Mischer nach Anspruch 14, der ferner einen Einlaufeinsatz (30) nahe der Auslaßzone (18) aufweist, welcher eine Rührzone (28) bildet, wobei der Düsenspitzenhalter (60) eine Dichtung mit der Rührzone (28) bildet.

16. Mischer nach Anspruch 1 oder 2, der ferner zumindest zwei Schmelzeströmungskanäle (14, 214) aufweist, wobei zumindest Mischer in getrennten Schmelzeströmungskanälen (14, 214) vorgesehen sind.

17. Verfahren zum Einspritzen und Mischen einer Materialschmelze in eine Form zur Bildung eines geformten Teiles mit einer Kernseitenfläche und einer Hohlraumseitenfläche, wobei das Verfahren umfaßt:
Erzeugen eines Materialschmelzestromes in einem Schmelzeströmungskanal (14);
Lenken des Schmelzestromes um ein langgestrecktes Element (36) herum, das in dem Strömungskanal (14) vorgesehen ist;
wendelförmiges Umlenken des Materialschmelzestromes um zumindest eine Spiralnut (46); und
intermittierendes Aussetzen des wendelförmigen Stromes den Stegzonen (48), die durch die Bereiche zwischen der Spiralnut (46) gebildet sind, um ein axiales Umlenken des Materialschmelzestromes in diesen Zonen der Stege (48) zu induzieren, wobei das Spiel der Stege (48) gegen die Auslaßzone (18) zunimmt; und
Überführen der Schmelze durch den Auslaß in einen Hohlraum einer Form;
**dadurch gekennzeichnet, daß**
das wendelförmige Umlenken entlang einer Innenfläche (42) des Schmelzeströmungskanals (16) erfolgt, welche dem langgestreckten Element (36) gegenüberliegt, wobei die Orientierung der ersten Spiralnut (46) die Verteilung des Harzes in der Form bewirkt, um eine Verteilung der Schweißlinien oder -fehler gegen die Kernseitenfläche des geformten Teiles zu bewirken, um das Aussehen der Hohlraumseitenfläche des geformten Teiles zu verbessern.

18. Verfahren zum Einspritzen und Mischen einer Materialschmelze in eine Form zur Bildung eines geformten Teiles gemäß Anspruch 17, wobei das wendelförmige Umlenken des Materialschmelzestromes den Schmelzestrom wendelförmig um eine zweite Spiralnut (96) umlenkt, die an dem langgestreckten Element vorgesehen und mit der ersten Spiralnut (46) ausgerichtet ist.

## Revendications

1. Mélangeur de flux en fusion pour une machine de moulage par injection qui produit des pièces moulées ayant une surface côté noyau et une surface côté cavité, le mélangeur comprenant :
un canal d'écoulement (14) ayant un élément allongé (36) disposé dans ledit canal d'écoulement (14), ledit canal d'écoulement ayant une aire de sortie (18) ;
une première gorge en spirale (46) située sur une surface dans ledit canal d'écoulement (14), ladite première gorge en spirale (46) ayant une profondeur qui diminue en direction de ladite aire de sortie (18), et
dans lequel sont définies des portées (48) par régions entre ladite première gorge en spirale (46), lesdites portées présentant un jeu qui augmente vers ladite aire de sortie (18), de telle façon qu'un flux de résine, que l'on applique en utilisation audit appareil de mélange en fusion, devient hélicoïdal à travers ladite première gorge en spirale (46), et axialement par-dessus lesdites portées (48) pour provoquer la distribution de la résine lorsque celle-ci s'écoule entre la surface et ledit élément allongé (36) et en sortant de ladite aire de sortie (18) ;
**caractérisé en ce que** ladite première gorge en spirale (46) fait face vers ledit élément allongé (36), l'orientation de la première gorge en spirale améliorant l'aspect de la surface côté cavité d'une pièce moulée, formée pendant un cycle de moulage de la machine de moulage par injection, en effectuant la distribution de résine et la distribution des lignes de soudure ou des défauts d'aspect dans la pièce moulée en direction de la surface côté noyau.

2. Mélangeur de produits en fusion selon la revendication 1, comprenant en outre :
une seconde gorge en spirale située sur ledit élément allongé (36) ;
ladite première gorge en spirale (46) étant alignée avec ladite seconde gorge en spirale pour améliorer encore une surface côté noyau de ladite pièce moulée.

3. Mélangeur selon la revendication 1 ou 2, dans lequel ledit élément allongé (36) est un élément choisi parmi :
une torpille ;
une tige de valve mobile (74) dont la fonction, en utilisation, est de commander un écoulement de ladite résine ; et
un guide (116) pour tige de valve.

4. Mélangeur selon la revendication 1, 2 ou 3, dans lequel ledit canal d'écoulement de fusion (14) est disposé dans un élément parmi :
un insert de porte (30) ;
une barre de carotte (12a); et
un collecteur à canaux chauffés.

5. Mélangeur selon la revendication 4, dans lequel ledit insert de porte (30) est disposé dans un collecteur à canaux chauffés.

6. Mélangeur selon la revendication 4, dans lequel ledit collecteur à canaux chauffés est disposé dans un moule.

7. Mélangeur selon l'une quelconque des revendications 1 à 5, dans lequel ladite surface dans ledit canal d'écoulement (14) est :
une surface intérieure dudit canal d'écoulement (14) ; ou
une surface d'un insert (42) placé dans ledit canal d'écoulement ; ou
une surface d'un embout de buse (22') aligné avec ledit canal d'écoulement (14).

8. Mélangeur selon l'une quelconque des revendications précédentes, comprenant en outre une première section annulaire (50) en aval de ladite première gorge en spirale (46) pour la relaxation de ladite résine vis-à-vis des contraintes.

9. Mélangeur selon l'une quelconque des revendications précédentes, comprenant en outre une seconde section annulaire (52) en aval de ladite première section annulaire (50) pour réduire les variations d'épaisseur dans ladite résine.

10. Mélangeur selon l'une quelconque des revendications précédentes, dans lequel ladite première gorge en spirale (46) a une section transversale sensiblement semi-circulaire.

11. Mélangeur selon la revendication 2, dans lequel ladite première et ladite seconde gorge (46) ont une section transversale sensiblement semi-circulaire.

12. Mélangeur selon l'une quelconque des revendications précédentes, dans lequel une portion des lesdites portées (48) sont collées sur ledit élément allongé (36), et lesdites portées (48) ont un jeu qui augmente par rapport au audit élément allongé (36) vers ladite aire de sortie (18).

13. Mélangeur selon l'une quelconque des revendications précédentes, dans lequel un jeu initial entre ledit élément allongé (36) et lesdites portées (48) est d'au moins 0,05 mm.

14. Mélangeur selon la revendication 1 ou 2, incluant en outre un embout de buse (58) et un élément de retenue pour embout de buse (60), ledit élément de retenue (60) engageant ledit embout de buse (58) en fixant ledit embout de buse (58) dans ledit canal d'écoulement (14) pour matériau en fusion.

15. Mélangeur selon la revendication 14, incluant en outre un insert de porte (30) adjacent à ladite aire de sortie (18) qui forme une zone à bulles (28), ledit élément de retenue pour embout de buse (60) formant un joint avec ladite zone à bulles (28).

16. Mélangeur selon la revendication 1 ou 2, incluant en outre au moins deux canaux d'écoulement (14, 214) pour matériaux en fusion, dans lequel au moins deux mélangeurs sont disposés dans des canaux d'écoulement (14, 214) séparés.

17. Procédé pour injecter et mélanger un matériau en fusion dans un moule pour former une pièce moulée ayant une surface côté noyau et une surface côté cavité, ledit procédé comprenant les étapes consistant à :
créer un flux de matériau en fusion dans un canal d'écoulement (14) pour matériau en fusion ;
diriger ledit flux en fusion autour d'un élément allongé (36) disposé dans ledit canal d'écoulement (14) ;
rediriger de façon hélicoïdale ledit flux de matériau en fusion autour d'au moins une gorge en spirale (46) ; et
soumettre de façon intermittente ledit flux hélicoïdal à des zones de portée (48) définies par des régions entre ladite gorge en spirale (46) pour induire une redirection axiale dudit flux de matériau en fusion dans lesdites zones desdites portées (48), lesdites portées (48) ayant un jeu qui augmente en direction d'une aire de sortie (18) ; et
transférer le matériau en fusion à travers la sortie vers une cavité dans un moule ;
**caractérisé en ce que**
la redirection hélicoïdale se produit le long d'une surface intérieure (42) dudit canal d'écoulement (16) qui fait face à l'opposé dudit élément allongé (36), l'orientation de la première gorge en spirale (46) effectuant la distribution de résine dans le moule pour amener la distribution de ligne de soudure ou de défaut d'aspect vers la surface côté noyau de la pièce moulée pour améliorer l'aspect de la surface côté cavité de la pièce moulée.

18. Procédé pour injecter et mélanger un matériau en fusion dans un moule pour former une pièce moulée, selon la revendication 17, dans lequel la redirection hélicoïdale dudit flux de matériau en fusion redirige de façon hélicoïdale ledit flux de matériau en fusion autour d'une seconde gorge spiralée (96) située sur ledit élément allongé et alignée avec la première gorge spiralée (46).
